# EUROPEAN PATENT APPLICATION

(11) **EP 4 608 064 A1**
(43) Date of publication of application: **27.08.2025**
(21) Application number: 23902333.6
(22) Date of filing: 31.10.2023
(51) Int. Cl.: H04W 84/12, H04W 76/10

(54) **COMMUNICATION METHOD AND APPARATUS**

(30) Priority: 13.12.2022 CN 202211602571
(71) Applicant: Huawei Technologies Co., Ltd., Shenzhen, Guangdong 518129 (CN)
(72) Inventor: LING, Xuemeng, Shenzhen, Guangdong 518129 (CN); HU, Xiaotong, Shenzhen, Guangdong 518129 (CN); WANG, Hao, Shenzhen, Guangdong 518129 (CN)
(74) Representative: Epping - Hermann - Fischer
(86) International application number: PCT/CN2023/128328
(87) International publication number: WO 2024/125133

(57) **Abstract**

This application provides a communication method and apparatus, and relates to the field of communication technologies. The method is used to reduce collision between devices. In the method, any device (for example, a first device) on a wireless local area network may send a first acknowledgment frame to a device (for example, a second device) other than the first device on the wireless local area network, where the first acknowledgment frame indicates that the first device expects to access a channel. The first device receives a first control frame from the second device, where the first control frame indicates that the first device is allowed to access the channel, and the first control frame includes an address of the first device; and sends a first data frame to the second device. In this way, devices participating in channel contention on the wireless local area network are reduced, thereby reducing a possibility of the collision between devices.

## Description

### CROSS-REFERENCE TO RELATED APPLICATIONS

This application claims priority to Chinese Patent Application No. 202211602571.3, filed with the China National Intellectual Property Administration on December 13, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

A wireless local area network (wireless local area network, WLAN) may be widely applied to a scenario like a smart home, a smart office, a smart vehicle-mounted system, or the like.

Currently, if a device on the wireless local area network needs to send data, the device needs to contend for a channel with another device on the wireless local area network. It can be learned that there are a large quantity of devices participating in channel contention, causing a possibility of collision between devices to be high. For example, if the wireless local area network includes N devices, the N devices simultaneously participate in the channel contention, where N is a positive integer greater than 1. Therefore, how to reduce the probability of the collision between devices is a problem that needs to be urgently resolved.

### SUMMARY

Embodiments of this application provide a communication method and apparatus, to reduce a probability of collision between devices.

According to a first aspect, an embodiment of this application provides a communication method. The method may be performed by a first device, or may be performed by a module (such as a chip) in the first device. For ease of description, the following uses an example in which the first device performs the method for description. The method includes: sending, by the first device, a first acknowledgment frame to a second device, where the first acknowledgment frame indicates that the first device expects to access a channel, receiving a first control frame from the second device, where the first control frame indicates that the first device is allowed to access the channel, the first control frame includes an address of the first device, and the second device is any device other than the first device on a wireless local area network; and sending a first data frame to the second device.

Optionally, the first acknowledgment frame is, for example, a block acknowledgment (block acknowledgment, BA) frame or a clear to send (clear to send, CTS) frame. The clear to send frame may also be referred to as a clear to send frame. Optionally, the first control frame is, for example, the CTS frame. Optionally, the first device may be a station (station, STA) or an access point (access point, AP) on the wireless local area network.

In this embodiment of this application, any device (for example, the second device) on the wireless local area network may occupy a channel for another device (for example, the first device), so that the first device can occupy the channel to send a data frame to the second device. In this way, this is equivalent to that some devices on the wireless local area network may occupy channels for the other devices, so that devices participating in channel contention become half of the total quantity of devices included on the wireless local area network. For example, if the wireless local area network includes M devices, the quantity of devices participating in the channel contention is (M/2), where M is an integer greater than 1. Because the quantity of devices participating in the channel contention on the wireless local area network is reduced, a probability (or a possibility) of collision between devices is reduced. In addition, after receiving the first control frame from the second device, the first device may send the data frame, so that the first device can quickly access the channel and send the data frame. This helps reduce waiting duration for the first device to send the data frame, helps reduce a delay for the first device to send the data frame, and improves communication efficiency on the wireless local area network.

In a possible implementation, before the sending a first acknowledgment frame to a second device, the method further includes: receiving a second control frame or a second data frame from the second device, where the second control frame or the second data frame indicates first duration, the first duration includes duration for which the second device sends the first control frame, and the first acknowledgment frame indicates that the second control frame or the second data frame has been received. Optionally, the second control frame is, for example, an RTS frame. Optionally, a start (or start) moment of the duration (that is, the first duration) in which the second device sends the first control frame may be a moment at which the first device receives the second control frame or the second data frame, and a termination (or an end) moment of the first duration may be a moment at which the first device receives the first control frame.

In the foregoing implementation, the second device may send the control frame (for example, the second control frame) or the data frame (for example, the second data frame) to the first device, and reserve, through the second control frame or the second data frame, the duration for which the second device sends the first control frame. In this way, a device other than the second device on the wireless local area network can sense the first duration, and the another device can perform channel backoff in time, thereby reducing the channel contention, and improving a success rate at which the second device sends the first control frame.

In a possible implementation, the first acknowledgment frame further indicates second duration. The second duration includes duration for which the first device expects to occupy the channel.

In the foregoing implementation, the first device declares, through the first acknowledgment frame, the duration (that is, the second duration) for which the first device expects to occupy the channel, so that the second device can determine the second duration through the first acknowledgment frame, thereby helping the second device to subsequently reserve enough duration for the first device.

In a possible implementation, the first control frame further indicates third duration. The third duration includes duration for which the first device occupies the channel.

In the foregoing implementation, the second device may further declare, through the first control frame, the duration (that is, the third duration) for which the first device occupies the channel. Then, channel occupation duration is reserved for the first device, so that the first device has enough time to send the data frame. In addition, a device other than the first device and the second device on the wireless local area network can sense the duration for which the first device occupies the channel, and the another device can perform the channel backoff in time, thereby reducing the possibility of collision between devices, and helping improve a success rate at which the first device sends the data frame.

In a possible implementation, the third duration is equal to the second duration.

In the foregoing implementation, the second device may reserve, for the first device, the duration (that is, the second duration) for which the first device expects to occupy the channel, so that the first device has enough time to transmit the data frame.

In a possible implementation, the method further includes: setting duration of a first timer to the third duration. The first timer may be a software module or a hardware module in the first device. Optionally, the first timer is, for example, a contention-based transmission opportunity (transmission opportunity, TXOP) timer.

In the foregoing implementation, after receiving the first control frame, the first device may set the duration of the first timer to the third duration, to control, based on the first timer, the duration of sending the data frame.

In a possible implementation, before the sending a first data frame to the second device, the method further includes: waiting for a short interframe space, and determining that a state of the channel is idle; or determining that a state of the channel is updated from busy to idle and that remaining duration of the first timer is greater than or equal to a priority interframe space.

In the foregoing implementation, the first device may send the first data frame after waiting for the short interframe space and when the channel is idle, or the first device may send the first data frame after determining that the channel becomes idle and that the remaining duration of the first timer is greater than or equal to the priority interframe space. In this way, a case in which the another device fails to send data because the first device forcibly preempts the channel can be avoided, which helps improve the success rate at which the first device sends the first data frame, and also helps improve communication reliability on the wireless local area network.

In a possible implementation, after the determining that a state of the channel is updated from busy to idle and that remaining duration of the first timer is greater than or equal to a priority interframe space, the method further includes: waiting for the priority interframe space.

In the foregoing implementation, after the determining that a state of the channel is updated from busy to idle and that remaining duration of the first timer is greater than or equal to a priority interframe space, the first device may further wait for the priority interframe space. This can further ensure that the channel is idle, and helps the first device to successfully send the first data frame.

In a possible implementation, after the sending a first data frame to the second device, the method further includes: if the remaining duration of the first timer is greater than fourth duration, sending a third data frame to the second device, where the fourth duration includes duration for which data interaction is performed once between the first device and the second device.

In the foregoing implementation, it is possible that the channel occupation duration reserved by the second device for the first device is long, and after the first device sends the first data frame, enough time is further reserved. In this case, the first device may continue to send the third data frame, so that the first device can fully use channel access duration reserved for the first device.

In a possible implementation, the method further includes: receiving a second acknowledgment frame from the second device, where the second acknowledgment frame indicates that the second device has received the data frame from the first device. Optionally, the second acknowledgment frame indicates, for example, that the second device has received the first data frame, the third data frame, or the like from the first device. Optionally, the second acknowledgment frame is, for example, the BA frame.

In the foregoing implementation, after receiving the data frame from the first device, the second device may send the second acknowledgment frame to the first device, so that the first device can determine that the second device has received the data frame, thereby improving reliability of interaction between the first device and the second device.

In a possible implementation, after the receiving a second acknowledgment frame from the second device, the method further includes: when the remaining duration of the first timer is less than or equal to a first threshold, determining to end the interaction between the first device and the second device, or when the remaining duration of the first timer is greater than a first threshold, sending an end frame to the second device, where the end frame indicates to end the interaction between the first device and the second device. Optionally, the end frame is, for example, a contention-free period end (contention-free end, CF-END) frame.

In the foregoing implementation, after the first device sends the data frame, if the reserved channel occupation duration is long, the first device may send the end frame to the second device, to end the interaction between the first device and the second device as soon as possible, so that a channel resource occupied by the first device can be released in time. Alternatively, if the reserved channel occupation duration is short, the first device may directly determine to end the interaction between the first device and the second device. In this way, a channel resource occupied by the first device can be released in time, and the quantity of times of interaction between the first device and the second device can be reduced.

In a possible implementation, the first acknowledgment frame includes a duration field. A value of the duration field is the second duration. Optionally, the first acknowledgment frame is, for example, the BA frame, and the duration field may be a duration (duration) field in the BA frame.

In this implementation, an existing duration field in the first acknowledgment frame may be used to carry the second duration, and a field does not need to be added to the first acknowledgment frame. Therefore, a change to a frame structure of the first acknowledgment frame is reduced, which helps reduce costs and difficulty of applying this implementation.

According to a second aspect, an embodiment of this application provides a communication method. The method may be performed by a second device, or may be performed by a module (such as a chip) in the second device. For ease of description, the following uses an example in which the second device performs the method for description. The method includes: receiving, by the second device, a first acknowledgment frame from a first device, where the first acknowledgment frame indicates that the first device expects to access a channel, and the first device is any device other than the second device on a wireless local area network; sending a first control frame to the first device, where the first control frame indicates that the first device is allowed to access the channel, and the first control frame includes an address of the first device; and receiving a first data frame from the first device.

Optionally, the second device may be a STA or an AP on the wireless local area network.

In a possible implementation, before the receiving a first acknowledgment frame from a first device, the method further includes: sending a second control frame, or sending a second data frame to the first device, where the second control frame or the second data frame indicates first duration, the first duration includes duration for which the second device sends the first control frame, and the first acknowledgment frame indicates that the second control frame or the second data frame has been received.

In a possible implementation, the first acknowledgment frame further indicates second duration. The second duration includes duration for which the first device expects to occupy the channel.

In a possible implementation, before the receiving a first acknowledgment frame from a first device, the method further includes: sending a second control frame, or sending a second data frame to the first device, where the second control frame or the second data frame indicates first duration, the first duration includes duration for which the second device sends the first control frame, and the first acknowledgment frame indicates that the second control frame or the second data frame has been received.

In a possible implementation, the first acknowledgment frame further indicates second duration. The second duration includes duration for which the first device expects to occupy the channel.

In a possible implementation, the first control frame further indicates third duration. The third duration includes duration for which the first device occupies the channel.

In a possible implementation, the third duration is equal to the second duration.

In a possible implementation, the method further includes: setting duration of a second timer to the third duration. The second timer may be a timer in the second device, and the second timer may be a software module or a hardware module in the second device. The second timer may be, for example, a TXOP timer.

In a possible implementation, the method further includes: sending a second acknowledgment frame to the first device, where the second acknowledgment frame indicates that the second device has received the data frame from the first device.

In a possible implementation, the method further includes: receiving an end frame from the first device, where the end frame indicates to end interaction between the first device and the second device; or when remaining duration of the second timer is less than or equal to a first threshold, determining to end the interaction between the first device and the second device.

In a possible implementation, after the receiving a first data frame from the first device, the method further includes: receiving a third data frame from the first device.

In a possible implementation, before the sending a first control frame to the first device, the method further includes: determining that the first device has a to-be-sent data frame. Optionally, if determining that the second duration is greater than or equal to a second threshold, the second device determines that the first device has a to-be-sent data frame.

In the foregoing implementation, the second device may determine, based on the second duration indicated by the first acknowledgment frame, that the first device has the to-be-sent data frame, to avoid a waste of channel resources caused when the second device reserves a channel resource for the first device but the first device has no data frame to send.

According to a third aspect, an embodiment of this application provides a communication apparatus. The communication apparatus may be the first device in the first aspect, or may be a module (for example, a chip) in the first device. The communication apparatus includes a corresponding means (means) or module configured to perform the first aspect or any possible implementation. For example, the communication apparatus includes a processing module (which is sometimes also referred to as a processing unit) and a transceiver module (which is sometimes also referred to as a transceiver unit).

For example, the transceiver module is configured to: under control of the processing module, send a first acknowledgment frame to a second device; receive a first control frame from the second device; and send a first data frame to the second device. For content of the second device, the first acknowledgment frame, and the first control frame, refer to the content described in the first aspect.

In an optional implementation, the communication apparatus includes a storage module. The processing module can be coupled to the storage unit, and execute a program or instructions in the storage module, to enable the communication apparatus to perform a function of the first device.

According to a fourth aspect, an embodiment of this application provides a communication apparatus. The communication apparatus may be the second device in the second aspect, or may be a module (for example, a chip) in the second device. The communication apparatus includes a corresponding means (means) or module configured to perform the second aspect or any possible implementation. For example, the communication apparatus includes a processing module (which is sometimes also referred to as a processing unit) and a transceiver module (which is sometimes also referred to as a transceiver unit).

For example, the transceiver module is configured to: under control of the processing module, receive a first acknowledgment frame from a first device; send a first control frame to the first device; and receive a first data frame from the first device. For content of the first device, the first acknowledgment frame, and the first control frame, refer to the content described in the second aspect.

In an optional implementation, the communication apparatus includes a storage module (which is sometimes also referred to as a storage unit). The processing module can be coupled to the storage module, and execute a program or instructions in the storage module, to enable the communication apparatus to perform a function of the second device.

According to a fifth aspect, an embodiment of this application provides a communication system. The communication system includes a first device and a second device. The first device may implement the method according to the first aspect or any possible implementation, and the second device may implement the method according to the second aspect or any possible implementation.

According to a sixth aspect, an embodiment of this application provides a communication system. The communication system includes any first device according to the third aspect and any second device according to the fourth aspect.

According to a seventh aspect, an embodiment of this application provides a communication apparatus. The communication apparatus includes a processor and a communication interface. The communication interface is configured to: receive a signal from an apparatus other than the communication apparatus and transmit the signal to the processor, or send a signal from the processor to an apparatus other than the communication apparatus. The processor is configured to implement the method according to the first aspect or any possible implementation or the method according to the second aspect or any possible implementation through a logic circuit or by executing code instructions.

According to an eighth aspect, an embodiment of this application provides a chip system. The chip system includes a processor and an interface. The processor is configured to invoke instructions from the interface and run the instructions. When executing the instructions, the processor implements the method according to the first aspect or any possible implementation or the method according to the second aspect or any possible implementation.

According to a ninth aspect, an embodiment of this application provides a computer-readable storage medium. The computer-readable storage medium is configured to store a computer program or instructions. When the computer program or the instructions are run, the method according to the first aspect or any possible implementation or the method according to the second aspect or any possible implementation is implemented.

According to a tenth aspect, an embodiment of this application provides a computer program product including instructions. When the computer program product runs on a computer, the method according to the first aspect or any possible implementation or the method according to the second aspect or any possible implementation is implemented.

For beneficial effect of the second aspect to the tenth aspect, refer to the beneficial effect of the first aspect. Details are not described herein.

### BRIEF DESCRIPTION OF DRAWINGS

FIG. 1 is a diagram of a scenario according to an embodiment of this application;
FIG. 2 is a diagram of interaction between devices;
FIG. 3 is a diagram of a communication method according to an embodiment of this application;
FIG. 4 is a diagram of transmitting a control frame 1 and an acknowledgment frame 1 according to an embodiment of this application;
FIG. 5 is another diagram of transmitting a control frame 1 and an acknowledgment frame 1 according to an embodiment of this application;
FIG. 6 is still another diagram of transmitting a control frame 1 and an acknowledgment frame 1 according to an embodiment of this application;
FIG. 7 is a diagram of transmitting a data frame 1 and an acknowledgment frame 1 according to an embodiment of this application;
FIG. 8 is a diagram of a structure of a control frame 2 according to an embodiment of this application;
FIG. 9 is a diagram of performing channel backoff by a first device according to an embodiment of this application;
FIG. 10 is another diagram of performing channel backoff by a first device according to an embodiment of this application;
FIG. 11 is still another diagram of performing channel backoff by a first device according to an embodiment of this application;
FIG. 12 is yet another diagram of performing channel backoff by a first device according to an embodiment of this application;
FIG. 13 is a diagram of sending a data frame by a first device according to an embodiment of this application;
FIG. 14 is a diagram of sending an end frame by a first device according to an embodiment of this application;
FIG. 15 is another diagram of sending an end frame by a first device according to an embodiment of this application;
FIG. 16 is still another diagram of sending an end frame by a first device according to an embodiment of this application;
FIG. 17 is a diagram of a structure of a communication apparatus according to an embodiment of this application; and
FIG. 18 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In the following, some terms in embodiments of this application are explained and described to facilitate understanding by a person skilled in the art.
1. WLAN is a typical local area network (local area network, LAN). The wireless local area network may be a WLAN of any protocol in institute of electrical and electronics engineers (institute of electrical and electronics engineers, IEEE) 802.11 series protocols, or may be a WLAN of a protocol evolving in the future. Devices that may be included on the WLAN may be classified into two roles: an AP and a STA.
2. The AP may be an access point for a terminal device (for example, a mobile phone) to access a wired (or wireless) network. The AP is equivalent to a bridge that connects the wired network and the wireless network. A main function of the AP is to connect devices on various wireless networks together and then connect the wireless networks to the Ethernet. For example, the AP may be a terminal device (such as a mobile phone) or a network device (such as an optical modem, a router, or a switch) with a wireless fidelity (wireless fidelity, Wi-Fi) chip. The AP may be a device that supports the 802.11be standard, or may be a device that supports a plurality of WLAN standards of the 802.11 series such as 802.11ax, 802.11 ay, 802.11ac, 802.11n, 802.11g, 802.11b, 802.11a, and next-generation 802.11be, or may be an AP of a protocol evolving in the future.
3. The STA may be a wireless communication chip, a wireless sensor, a terminal device, or the like. For example, the STA may be a terminal device supporting a Wi-Fi communication function, an internet of things (internet of things, IoT) device supporting a Wi-Fi communication function, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, and the like. Optionally, the STA may support the 802.11be standard, or may support a plurality of WLAN standards of the 802.11 series such as 802.11 ax, 802.11ay, 802.11ac, 802.11n, 802.11g, 802.11b, 802.11a, and next-generation 802.11be, or may be an STA of a protocol evolving in the future. The IoT device may include but is not limited to a device that supports a Wi-Fi communication function, such as a smart lamp, a smart socket, a smart switch, a smart camera, a smart home appliance, a smart set-top box, a smart curtain, or a smart door.
4. A terminal device is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like. Optionally, the terminal device is specifically, for example, a super terminal or a large-screen device.
5. A short interframe space (short interframe space, SIFS) refers to a minimum interval between two frames transmitted on a wireless local area network. On a wireless local area network of the 802.11 series, the SIFS may be a fixed value. Therefore, a device using the SIFS may have a highest priority for accessing a channel.
6. A priority interframe space (priority interframe space, PIFS) refers to time required for transmitting a frame that is preferentially sent.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one of a, b, or c indicates a, b, c, a and b, a and c, b and c, or a, b, and c, where a, b, and c may be singular or plural.

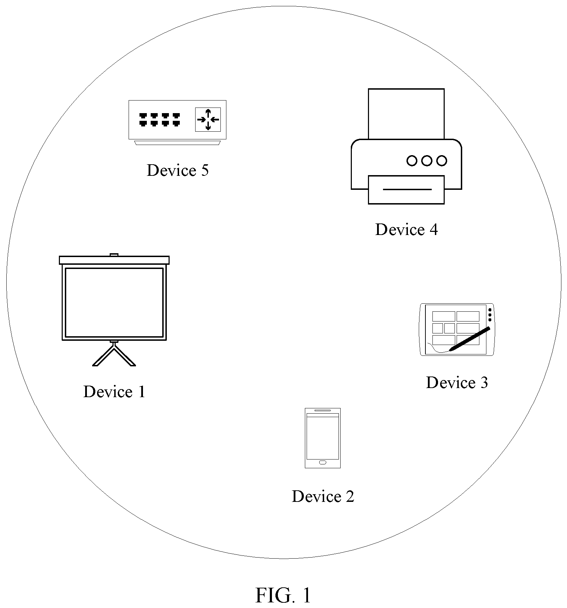

FIG. 1 is a diagram of a scenario to which an embodiment of this application is applicable. Alternatively, FIG. 1 may also be understood as a diagram of deployment of a device on a wireless local area network. The wireless local area network may include a plurality of devices, and any two of the plurality of devices may communicate with each other. The devices may be, for example, IoT devices or terminal devices. An implementation form of the devices on the wireless local area network is not limited in embodiments of this application.

The plurality of devices shown in FIG. 1 may all be STAs or APs. Alternatively, some devices of the plurality of devices are the STAs, and the other devices of the plurality of devices are the APs. Roles of the plurality of devices on the wireless local area network are not limited in this embodiment of this application. For an implementation of the STAs or the APs, refer to the foregoing description.

In FIG. 1, an example in which the plurality of devices include five devices in FIG. 1: a device 1, a device 2, a device 3, a device 4, and a device 5 is used. A quantity of devices included in the plurality of devices is not limited actually.

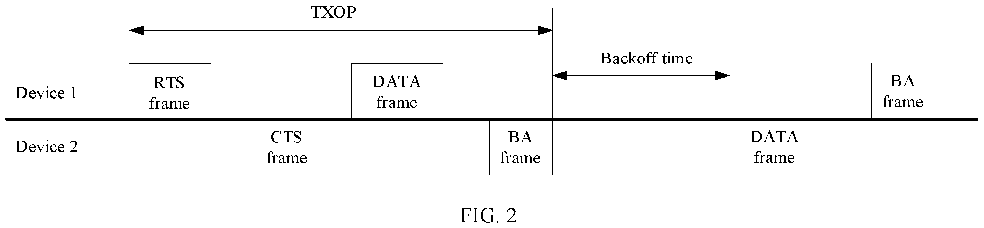

In a channel contention mechanism, a device on the wireless local area network needs to send a data frame, and another device on the wireless local area network needs to independently perform channel backoff. FIG. 2 is a diagram of interaction between devices in the channel contention mechanism. A device 1 in FIG. 2 is, for example, the device 1 in FIG. 1. A device 2 in FIG. 2 is, for example, the device 1 in FIG. 1. With reference to FIG. 2, the following describes a process of interaction between devices in the channel contention mechanism.
1. The device 1 may send a request to send (request to send, RTS) a frame in a unicast manner on the wireless local area network. Correspondingly, the device 2 receives the RTS frame from the device 1.
   Thus, this is equivalent to that the device 1 broadcasts a requirement, on the wireless local area network, that the device 1 needs to send a data frame.
2. The device 2 sends a CTS frame to the device 1. Correspondingly, the device 1 receives the CTS frame from the device 2.
3. The device 1 sends a data (data) frame to the device 2. Correspondingly, the device 2 receives the data frame from the device 1.
4. The device 2 sends a BA frame to the device 1.
   Thus, the device 1 and the device 2 complete one TXOP.
5. The device 2 sends the data frame to the device 1.
   Optionally, the device 2 may send the data frame to the device 1 after backoff (backoff) time.
6. The device 1 sends the BA frame to the device 2.

It can be learned that, in the channel contention mechanism, if a device on the wireless local area network needs to send a data frame, the device needs to contend for a channel with all devices on the wireless local area network. As a result, a quantity of devices participating in channel contention is large, and a possibility of collision between devices is high.

In view of this, embodiments of this application provide a communication method. In the method, any device (for example, a second device) on the wireless local area network may reserve a channel access opportunity for any device (for example, a first device) on the wireless local area network, the second device may indicate the first device to access a channel, and the first device may directly access the channel to send the data frame. In this way, some devices on the wireless local area network do not need to participate in the channel contention, so that the quantity of devices participating in the channel contention on the wireless local area network is reduced, thereby reducing the possibility of collision between devices.

The following describes a method provided in embodiments of this application with reference to the accompanying drawings. In the accompanying drawings corresponding to embodiments of this application, all steps represented by using dashed lines are optional steps. In addition, the first device in embodiments of this application is, for example, any device in FIG. 1, for example, the device 1, the device 2, the device 3, the device 4, or the device 5 in FIG. 1. The second device in embodiments of this application is any device other than the first device in the devices in FIG. 1.

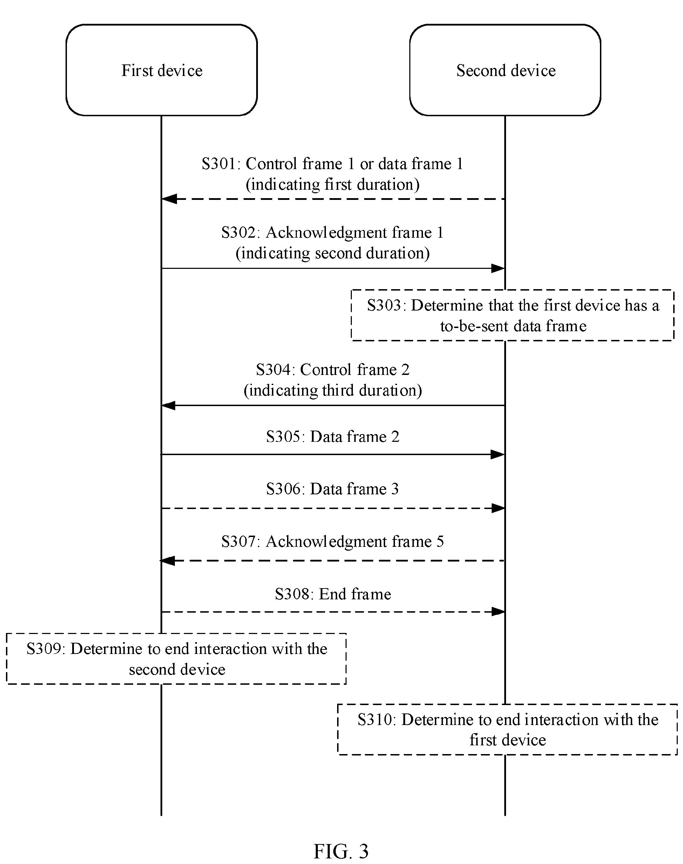

FIG. 3 is a diagram of a communication method according to an embodiment of this application.

S301: The second device sends a control frame 1 or a data frame 1. Correspondingly, the first device receives the control frame 1 or the data frame 1 from the second device. The control frame 1 may also be referred to as a second control frame. The data frame 1 may be referred to as a second data frame. The second device may be referred to as a local device, a transmit end, a transmit device, or the like. Correspondingly, the first device may be referred to as a peer device, a receive end, a receive device, or the like.

For example, the second device may send the control frame 1 in a broadcast manner. In this case, devices other than the second device on the wireless local area network may all receive the control frame 1. Certainly, the second device may also send the control frame 1 in a unicast manner. The second device may send the data frame 1 to the first device in the unicast manner.

Optionally, the control frame 1 or the data frame 1 may indicate first duration. The first duration includes duration for which the second device sends a control frame 2. The duration for which the second device sends the control frame 2 may be required duration between time at which the second device has sent the control frame 1 or the data frame 1 and time at which sending of the control frame 2 is completed. The first duration may be set in the second device through a protocol. In this way, the second device may reserve the duration required for sending the control frame 2 in advance.

The control frame 2 may also be referred to as a first control frame. The control frame 2 may indicate that the first device is allowed to access a channel. The first control frame may include an address of the first device. The address of the first device is, for example, a media access control (media access control, MAC) address of the first device.

In an example, the first duration may be set by the second device based on a requirement. Optionally, the first duration includes a sum of an SIFS and duration required for the second device to transmit the control frame 2 to the first device. For example, a start moment of the first duration is a moment at which the first device receives the control frame 1 or the data frame 1, and an end moment of the first duration is a moment at which the first device receives the control frame 2.

Optionally, the control frame 1 is, for example, an RTS frame.

Optionally, the control frame 1 or the data frame 1 may include a duration field. A value of the duration field in the control frame 1 or the data frame 1 is the first duration. In this way, this is equivalent to that the control frame 1 or the data frame 1 explicitly indicates the first duration. For example, the duration field is a duration field, for example, a duration field in the RTS frame.

In a possible implementation, before the first device sends the data frame 1, the second device may further send the RTS frame to the first device. Correspondingly, the first device may receive the RTS frame from the second device. The RTS frame indicates that the first device requests to send the data frame. After receiving the RTS frame from the second device, the first device may send a CTS frame to the second device. Correspondingly, the second device receives the CTS frame from the first device. The CTS frame indicates that the first device has received the RTS frame from the second device.

Alternatively, before the first device sends the data frame 1, the second device may send a self-CTS frame to the first device. Correspondingly, the first device receives the self (self)-CTS frame from the second device. A receiver address (receiver address, RA) of the self-CTS frame is an address of the second device. The receiver address may also be referred to as a destination address. The address of the second device is, for example, a MAC address of the second device.

Alternatively, before the first device sends the data frame 1, the second device may send a DATA frame to the first device. Correspondingly, the first device receives the DATA frame from the second device. After receiving the DATA frame from the second device, the first device may send a BA frame to the second device. Correspondingly, the second device receives the BA frame from the first device. The BA frame indicates that the first device has received the DATA frame from the second device.

S302: The first device sends an acknowledgment frame 1 to the second device. Correspondingly, the second device receives the acknowledgment frame 1 from the first device. The acknowledgment frame 1 may also be referred to as a first acknowledgment frame.

For example, the acknowledgment frame 1 indicates that the first device expects to access a channel. Optionally, the first acknowledgment frame may further indicate that the control frame 1 or the data frame 1 from the first device has been received.

Optionally, the acknowledgment frame 1 is, for example, the CTS frame or the BA frame.

For example, in S301, if the second device sends the control frame 1 to the first device, and the control frame 1 is the RTS frame, the acknowledgment frame 1 may be the CTS frame or the BA frame. Alternatively, in S301, if the second device sends the data frame 1 to the first device, the acknowledgment frame 1 may be the BA frame.

In an example, the acknowledgment frame 1 may further indicate second duration. The second duration includes (or is) duration for which the first device expects (or wants) to occupy the channel. A value of the second duration may be set by the first device based on a requirement.

Optionally, the acknowledgment frame 1 may include a duration field. A value of the duration field is the second duration. Optionally, the duration field is, for example, a duration field in the acknowledgment frame 1.

In a possible implementation, the first device may also directly send the acknowledgment frame 1 to the second device. In this case, S301 does not need to be performed. That is, S301 is an optional step, and is shown by using a dashed line in FIG. 3.

The following describes an example of a process in which the first device and the second device transmit the data frame 1 and the acknowledgment frame 1.

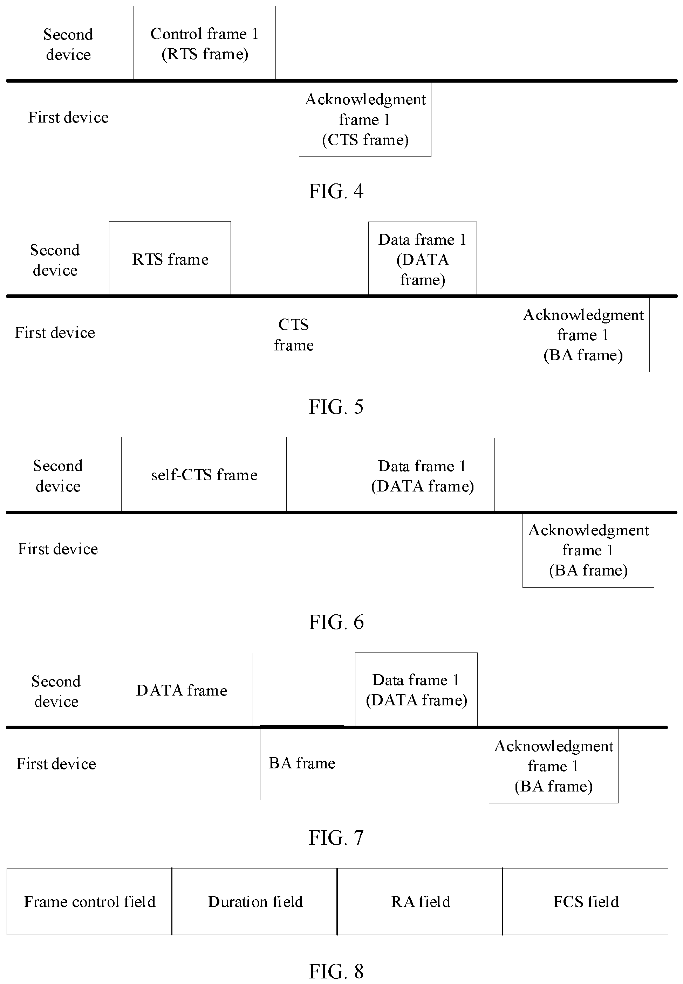

FIG. 4 is a diagram of transmitting the control frame 1 and the acknowledgment frame 1 according to an embodiment of this application. In FIG. 4, an example in which the second device sends the control frame 1 to the first device, the control frame 1 is the RTS frame, and the acknowledgment frame 1 is the CTS frame is used.

As shown in FIG. 4, the second device may send the control frame 1 (that is, the RTS frame). Correspondingly, the first device receives the control frame 1 (that is, the RTS frame) from the second device. Thus, this is equivalent to starting a TXOP. After receiving the control frame 1 (that is, the RTS frame) from the second device, the first device sends the acknowledgment frame 1 (that is, the CTS frame) to the second device. Correspondingly, the second device receives the acknowledgment frame 1 (that is, the CTS frame) from the first device.

FIG. 5 is another diagram of transmitting the control frame 1 and the acknowledgment frame 1 according to an embodiment of this application. In FIG. 5, an example in which the second device sends the data frame 1 to the first device, the data frame 1 is the DATA frame, and the acknowledgment frame 1 is the BA frame is used.

As shown in FIG. 5, the second device may send the RTS frame. Correspondingly, the first device receives the RTS frame from the second device. Thus, this is equivalent to starting the TXOP. After receiving the RTS frame from the second device, the first device sends the CTS frame to the second device. Correspondingly, the second device receives the CTS frame from the first device. After receiving the CTS frame from the first device, the second device may send the data frame 1 to the first device. Correspondingly, the first device receives the data frame 1 from the second device. Further, the first device may send the acknowledgment frame 1 (that is, the BA frame) to the second device. Correspondingly, the second device receives the acknowledgment frame 1 (that is, the BA frame) from the first device.

FIG. 6 is still another diagram of transmitting the control frame 1 and the acknowledgment frame 1 according to an embodiment of this application. In FIG. 6, an example in which the second device sends the data frame 1 to the first device, the data frame 1 is the DATA frame, and the acknowledgment frame is the BA frame is used.

As shown in FIG. 6, the second device may send the self-CTS frame. Correspondingly, the first device receives the self-CTS frame from the second device. Thus, this is equivalent to starting the TXOP. The second device sends the data frame 1 (that is, the DATA frame) to the first device. Correspondingly, the first device receives the data frame 1 (that is, the DATA frame) from the second device. Further, the second device sends the acknowledgment frame 1 (that is, the BA frame) to the first device. Correspondingly, the first device receives the acknowledgment frame 1 (that is, the BA frame) from the second device.

FIG. 7 is a diagram of transmitting the data frame 1 and the acknowledgment frame 1 according to an embodiment of this application. In FIG. 7, an example in which the second device sends the data frame 1 to the first device, the data frame 1 is the DATA frame, and the acknowledgment frame is the BA frame is used.

As shown in FIG. 7, the second device may send the DATA frame. Correspondingly, the first device receives the DATA frame from the second device. Thus, this is equivalent to starting the TXOP. The first device sends the BA frame to the second device. Correspondingly, the second device receives the BA frame from the first device. The second device sends the data frame 1 (the DATA frame) to the first device. Correspondingly, the first device receives the data frame 1 (the DATA frame) from the second device. The first device sends the acknowledgment frame 1 (that is, the BA frame) to the second device. Correspondingly, the second device receives the acknowledgment frame 1 (that is, the BA frame) from the first device.

S303: The second device determines that the first device has a to-be-sent data frame.

For example, if the second duration indicated by the acknowledgment frame 1 from the first device is greater than or equal to a second threshold, it is determined that the first device has the to-be-sent data. The second threshold may be set in the second device through a protocol, or may be agreed on, by the first device and the second device, in the second device through negotiation. If the second duration indicated by the acknowledgment frame 1 from the first device is less than the second threshold, it is determined that the first device does not have the to-be-sent data.

Alternatively, the acknowledgment frame 1 may further indicate that the first device has a to-be-sent data frame, or indicate that the first device does not have a to-be-sent data frame. In this way, after receiving the acknowledgment frame 1, the second device may parse the acknowledgment frame 1 to determine whether the first device has the to-be-sent data frame.

In a possible implementation, if the second device sends the control frame 1 in the broadcast manner, other devices other than the second device on the wireless local area network may all send acknowledgment frames 1 to the second device. In this case, the second device further determines a device that meets a first condition and that is in the other devices as a device that accesses the channel (in embodiments of this application, an example in which the device that accesses the channel is the first device is used for description).

For example, the first condition includes that the first device has the to-be-sent data and/or the first device is a device with a highest priority in the other devices. For a manner of determining, by the second device, that the first device has the to-be-sent data, refer to the foregoing content. Optionally, priorities of the other devices may be agreed on through a protocol, or may be manually set in the second device. In this implementation, the second device may select, from the other devices, a device that meets the first condition as a device that accesses a channel, so that a device with a higher priority may preferentially send the data frame.

Certainly, there are a plurality of manners in which the second device determines a device that accesses the channel. This is not specifically limited in this embodiment of this application.

In another possible implementation, the second device may not need to determine whether the first device has the to-be-sent data. In this case, step S303 does not need to be performed. That is, S303 is an optional step, and is shown by using a dashed line in FIG. 3.

S304: The second device sends the control frame 2 to the first device. Correspondingly, the first device receives the control frame 2 from the second device. The control frame 2 may also be referred to as the first control frame.

For example, for content of the control frame 2, refer to the foregoing description. Optionally, the control frame 2 may indicate, by using the address of the first device, that the first device is allowed to access the channel.

In a possible implementation, the control frame 2 indicates third duration. The third duration includes (or is) duration for which the first device occupies the channel. The third duration may be understood as channel occupation duration that is actually reserved by the second device for the first device. The third duration is considered as duration of one TXOP. Correspondingly, the third duration may be represented by a handshake (handshake, HS)-TXOP or the TXOP.

For example, the second device may determine a value of the third duration based on a requirement and/or a channel status.

For example, if the second device determines that the first device has excessive to-be-sent data, the second device may set the value of the third duration to be greater than or equal to a first value. If the second device determines that the first device has less to-be-sent data, the second device may set the value of the third duration to be less than the first value. The first value may be preset in the second device, for example, manually set in the second device, or set in the second device through a protocol.

For example, the channel status includes, for example, a busy state of the channel. For example, if determining that the channel is busy, the second device may set the value of the third duration to be greater than a second value. If determining that the channel is idle, the second device may set the value of the third duration to be less than the second value.

Alternatively, the second device may determine the third duration based on the second duration.

For example, the third duration may be equal to the second duration, or the third duration is greater than the second duration. Alternatively, if the duration for which the second device transmits the control frame 2 to the first device is further considered in the second duration, the third duration may be equal to a difference between the second duration and the duration for which the second device transmits the control frame 2 to the first device.

Optionally, the control frame 2 may also include a duration field. A value of the duration field is the third duration. In addition, the control frame 2 may be, for example, the CTS frame or an HS-CTS frame.

Optionally, FIG. 8 is a diagram of the control frame 2 according to an embodiment of this application. As shown in FIG. 8, a frame of the control frame 2 includes a frame control (frame control) field, a duration field, an RA field, and a frame check sequence (frame check sequence, FCS) field.

The frame control field indicates a type of the control frame 2, for example, a control frame. The duration field indicates duration, for example, the third duration. The RA field indicates a receiver address, for example, the address of the first device. The FCS field indicates check information. The check information is used to check the control frame 2.

The frame control field may include a type (type) byte and a subtype (subtype) byte. The type byte indicates a type that the control frame 2 belongs to, and the subtype byte indicates a specific type under the type that the control frame 2 belongs to.

For example, if a value of the type byte is 1, it indicates that the control frame 2 is a control frame. If a value of the subtype byte is 12, it indicates that the control frame 2 is a CTS frame in the control frame.

In a possible design, after determining that the first device receives the control frame 2, the second device may set duration of a second timer of the second device to the third duration. The second timer may be a hardware module or a software module in the second device. This is not limited in this embodiment of this application.

Similarly, after receiving the control frame 2, the first device may also set duration of a first timer of the first device to the third duration. The first timer may be a hardware module or a software module in the second device. This is not limited in this embodiment of this application. The first timer is, for example, a TXOP timer of the first device.

After S304 (that is, the second device sends the control frame 2), this may be equivalent to that the second device completes one TXOP.

S305: The first device sends a data frame 2 to the second device. Correspondingly, the second device receives the data frame 2 from the first device. The data frame 2 may also be referred to as a first data frame.

After receiving the control frame 2, the first device determines that the RA in the control frame 2 is the address of the first device, and therefore may determine to prepare to start the HS-TXOP with the second device.

For example, the data frame 2 may carry service data. The service data indicates, for example, an operating power, electricity, or the like of the first device.

In a possible implementation, the first device may perform the channel backoff before sending the data frame 2. The following describes possible cases in which the first device performs the channel backoff.

Case 1: After receiving the control frame 2, the first device determines that the channel is idle (idle), and may send the data frame 2 to the second device after waiting for the SIFS.

For example, the first device may determine whether the channel is idle based on a clear channel assessment (clear channel assessment, CCA). For example, the first device may sense a physical carrier, and determine energy of the channel. If the energy of the channel is greater than or equal to a third threshold, it indicates that the channel is busy (busy). If the energy of the channel is less than the third threshold, it indicates that the channel is idle. The third threshold may be set in the first device through a protocol, or may be manually set in the first device.

Alternatively, the first device may sense a virtual carrier. If duration indicated by a frame header of the data frame or the control frame received by the first device is greater than or equal to a fourth threshold, it is determined that the channel is busy. If the duration indicated by a frame header of the data frame or the control frame received by the first device is less than the fourth threshold, it is determined that the channel is idle. For a manner in which the first device obtains the fourth threshold, refer to the foregoing content in which the first device obtains the third threshold.

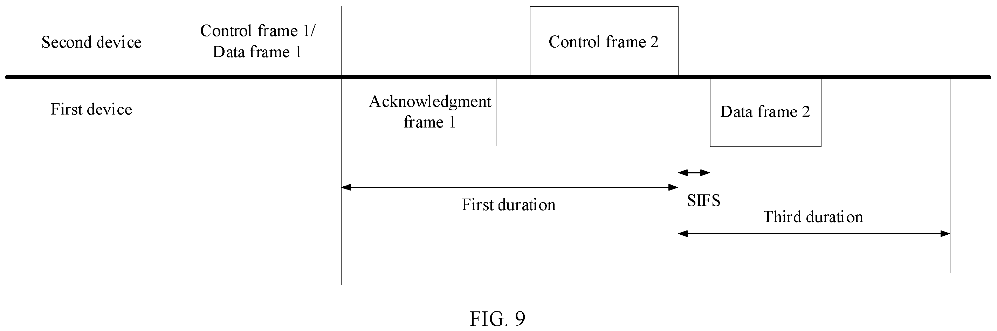

For example, FIG. 9 is a diagram of performing the channel backoff by the first device according to an embodiment of this application. As shown in FIG. 9, after receiving the control frame 2, the first device sends the data frame 2 to the second device after waiting for the SIFS and after the channel is idle.

In addition, FIG. 9 further shows a process of interaction between the first device and the second device before the first device receives the control frame 2. As shown in FIG. 9, the second device may send the control frame 1 or the data frame 1 to the first device. After receiving the control frame 1 or the data frame 1, the first device sends the acknowledgment frame 1 to the second device.

Case 2: If determining that a state of the channel is updated (or changed) from busy to idle and that remaining duration of the first timer is greater than or equal to a PIFS, the first device sends the data frame 2 to the second device.

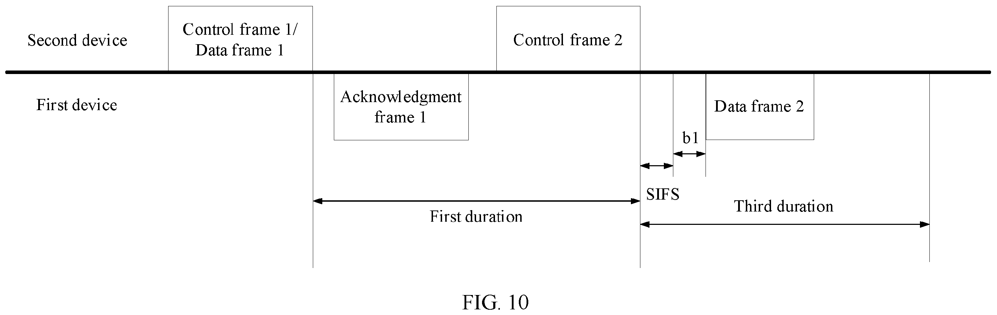

For example, FIG. 10 is another diagram of performing the channel backoff by the first device according to an embodiment of this application. As shown in FIG. 10, after receiving the control frame 2, the first device determines to wait for the SIFS, and determines that the channel is busy. In FIG. 10, an example in which channel busy duration is b1 is used. If the first device determines that the channel is updated to be idle after the duration b1 and that the remaining duration of the first timer is greater than the PIFS, the first device may send the data frame 2 to the second device.

In addition, FIG. 10 further shows a process of interaction between the first device and the second device before the first device receives the control frame 2. As shown in FIG. 10, the second device may send the control frame 1 or the data frame 1 to the first device. After receiving the control frame 1 or the data frame 1, the first device may also send the acknowledgment frame 1 to the second device.

Case 3: If determining that a state of the channel is updated (or changed) from busy to idle and that remaining duration of the first timer is greater than or equal to a PIFS, the first device sends the data frame 2 to the second device after waiting for the PIFS.

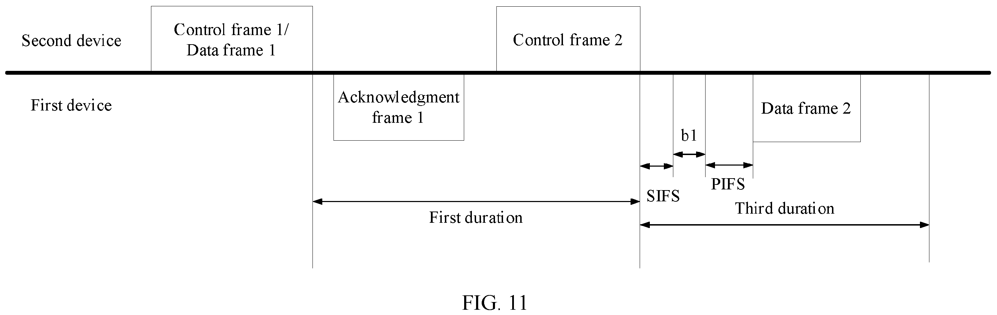

For example, FIG. 11 is still another diagram of performing the channel backoff by the first device according to an embodiment of this application. As shown in FIG. 11, after receiving the control frame 2, the first device determines to wait for the SIFS, and determines that the channel is busy. In FIG. 11, an example in which channel busy duration is b1 is used. If the first device determines that the channel is updated to be idle after the duration b1 and that the remaining duration of the first timer is greater than the PIFS, the first device may send the data frame 2 to the second device after waiting for the PIFS.

In addition, FIG. 11 further shows a process of interaction between the first device and the second device before the first device receives the control frame 2. As shown in FIG. 11, the second device may send the control frame 1 or the data frame 1 to the first device. After receiving the control frame 1 or the data frame 1, the first device may also send the acknowledgment frame 1 to the second device.

Case 4: If a state determined by the first device is updated from busy to idle, and remaining duration of the first timer is less than a PIFS, the first device may not send the data frame.

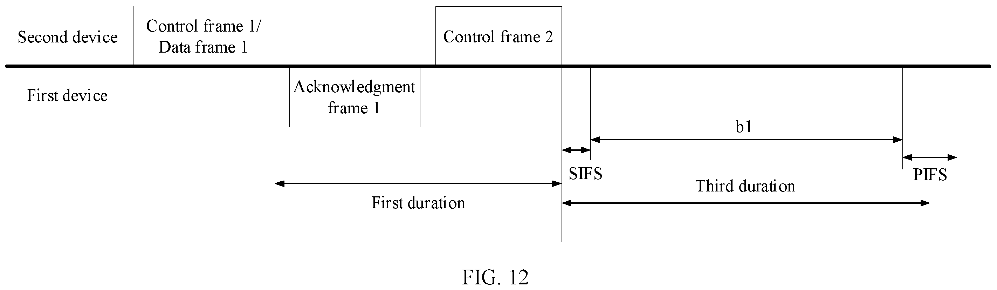

For example, refer to FIG. 12 for yet another diagram of performing the channel backoff by the first device according to an embodiment of this application. As shown in FIG. 12, after receiving the control frame 2, the first device determines to wait for the SIFS, and determines that the channel is busy. In FIG. 12, an example in which channel busy duration is b1 is used. If the first device determines that the channel is updated to be idle after the duration b1 and that the remaining duration of the first timer is less than the PIFS, the first device may not send the data frame to the second device.

In addition, FIG. 12 further shows a process of interaction between the first device and the second device before the first device receives the control frame 2. As shown in FIG. 12, the second device may send the control frame 1 or the data frame 1 to the first device. After receiving the control frame 1 or the data frame 1, the first device may also send the acknowledgment frame 1 to the second device.

Optionally, the data frame 2 may carry the remaining duration of the first timer.

In a possible implementation, after receiving the data frame 2, the second device may send an acknowledgment frame 2 to the first device. The acknowledgment frame 2 may also be referred to as a fourth acknowledgment frame. The acknowledgment frame 2 indicates that the data frame 2 has been received. In this way, the first device can determine that the second device has successfully received the data frame 2. Optionally, the acknowledgment frame 2 may be the BA frame. Optionally, the acknowledgment frame 2 may carry remaining duration of the second timer.

S306: The first device sends a data frame 3 to the second device. Correspondingly, the second device receives the data frame 3 from the first device. The data frame 3 may also be referred to as a third data frame.

For example, the first device may also perform the channel backoff before sending the data frame 3. For content of the channel backoff performed by the first device, refer to the foregoing content in which before sending the data frame 2, the first device performs the channel backoff. Details are not described herein again.

In a possible implementation, if the remaining duration of the first timer is greater than fourth duration after the first device sends the data frame 2, the first device sends the third data frame to the second device. This ensures that the first device can fully use channel access duration reserved by the second device for the first device, to send more data frames. In addition, when sending a subsequent data frame, the first device may directly send the subsequent data frame without accessing the channel again, thereby reducing the interaction between the first device and the second device.

The fourth duration is duration for which data interaction is performed once between the first device and the second device. The fourth duration may be, for example, a sum of the SIFS and duration required for sending a data frame once by the first device to the second device. Alternatively, the fourth duration may be, for example, a sum of two SIFSs, duration required for sending a data frame once by the first device to the second device, and duration required for sending an acknowledgment frame, indicating that the data frame is received, by the second device to the first device.

In another possible implementation, if the remaining duration of the first timer is less than or equal to the fourth duration after the first device sends the data frame 2, the first device may not need to perform step S306. That is, step S306 is an optional step, and is shown by using a dashed line in FIG. 3.

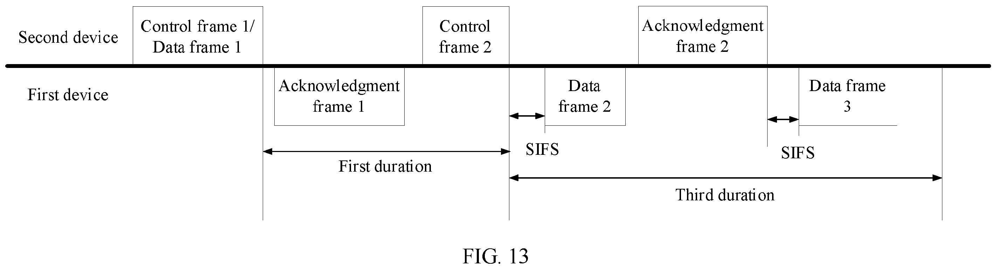

For example, refer to FIG. 13 for a diagram of sending the data frame by the first device according to an embodiment of this application. As shown in FIG. 13, the first device sends the data frame 2 to the second device. Correspondingly, the second device receives the data frame 2 from the first device. The second device may send the acknowledgment frame 2 to the first device. Correspondingly, the first device receives the acknowledgment frame 2 from the second device. If determining that the remaining duration of the first timer is greater than the fourth threshold, the first device may send the data frame 3 to the second device after waiting for the SIFS and after the channel is idle. Correspondingly, the second device receives the data frame 3 from the first device.

In addition, FIG. 13 further shows a process of interaction between the first device and the second device before the first device sends the data frame 2. As shown in FIG. 13, the second device may send the control frame 1 or the data frame 1 to the first device. After receiving the control frame 1 or the data frame 1, the first device sends the acknowledgment frame 1 to the second device. After receiving the acknowledgment frame 1, the second device sends the control frame 2 to the first device.

Optionally, the data frame 3 may also carry the remaining duration of the first timer.

Optionally, after receiving the data frame 3 from the first device, the second device may send an acknowledgment frame 3 to the first device. The acknowledgment frame 3 indicates that the second device has received the data frame 3. Optionally, the acknowledgment frame 3 may be the BA frame. Optionally, the acknowledgment frame 3 may also carry the remaining duration of the second timer.

Optionally, after sending the data frame 3 or receiving the acknowledgment frame 3, the first device determines that the remaining duration of the first timer is further greater than the fourth duration. In this case, the first device may further continue to send a data frame 4 to the second device. The data frame 4 may also be referred to as a fourth data frame. The rest can be deduced by analogy. Certainly, the first device may also perform the channel backoff before sending the data frame 4. For content of the channel backoff, refer to the content described above. Details are not described herein again. Optionally, after receiving the data frame 4 from the first device, the second device may send an acknowledgment frame 4 to the first device. The acknowledgment frame 4 indicates that the second device has received the data frame 4. Optionally, the acknowledgment frame 4 may be the BA frame.

Optionally, the data frame 4 may also carry the remaining duration of the first timer. The acknowledgment frame 4 may also carry the remaining duration of the second timer.

S307: The second device sends an acknowledgment frame 5 to the first device. Correspondingly, the first device receives the acknowledgment frame 5 from the second device. The acknowledgment frame 5 may also be referred to as a second acknowledgment frame. The acknowledgment frame 5 may indicate that the second device has received the data frame from the first device.

For example, when the first device sends only the data frame 2 to the second device, the acknowledgment frame 5 may indicate that the second device has received the data frame 2 from the first device. In this case, the acknowledgment frame 5 is the same as the foregoing acknowledgment frame 2. When the first device sends the data frame 2 and the data frame 3 to the second device, the acknowledgment frame 5 may indicate that the second device has received the data frame 3 from the first device. In this case, the acknowledgment frame 5 is the same as the foregoing acknowledgment frame 3. When the first device sends the data frame 2, the data frame 3, and the data frame 4 to the second device, the acknowledgment frame 5 may indicate that the second device has received the data frame 4 from the first device. In this case, the acknowledgment frame 5 is the same as the foregoing acknowledgment frame 4.

Optionally, the acknowledgment frame 5 may be the BA frame.

S308: The first device sends an end frame to the second device. Correspondingly, the second device receives the end frame from the first device. The end frame indicates to end the interaction between the first device and the second device.

In a possible implementation, after the first device sends the data frame 2, the data frame 3, or the data frame 4 to the second device, or after the first device determines to skip sending the data frame to the second device, the first device sends the end frame to the second device when determining that the remaining duration of the first timer is greater than the first threshold. In this way, the second device may determine to end the interaction with the first device. The first threshold may be manually set in the first device, or may be set in the first device through a protocol.

Optionally, the end frame may be a CF-END frame.

Alternatively, the first device may not need to send the end frame to the second device. In this case, S308 does not need to be performed. That is, S308 is an optional step, and is shown by using a dashed line in FIG. 3.

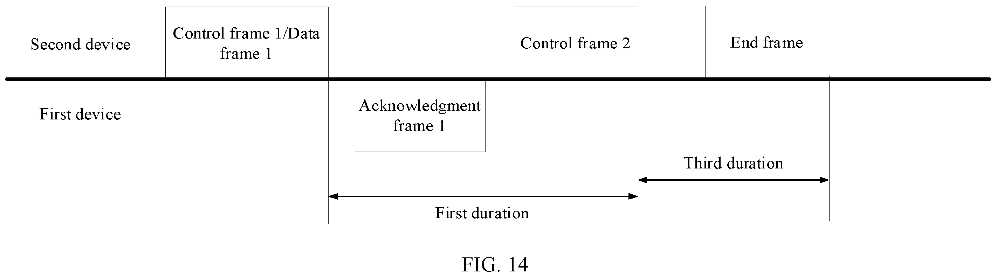

For example, refer to FIG. 14 for a diagram of sending the end frame by the first device according to an embodiment of this application. As shown in FIG. 14, after determining to skip sending the data frame to the second device, the first device may send the end frame to the second device.

In addition, FIG. 14 further shows a process of interaction between the first device and the second device before the first device sends the end frame. As shown in FIG. 14, the second device may send the control frame 1 or the data frame 1 to the first device. After receiving the control frame 1 or the data frame 1, the first device sends the acknowledgment frame 1 to the second device. After receiving the acknowledgment frame 1, the second device sends the control frame 2 to the first device.

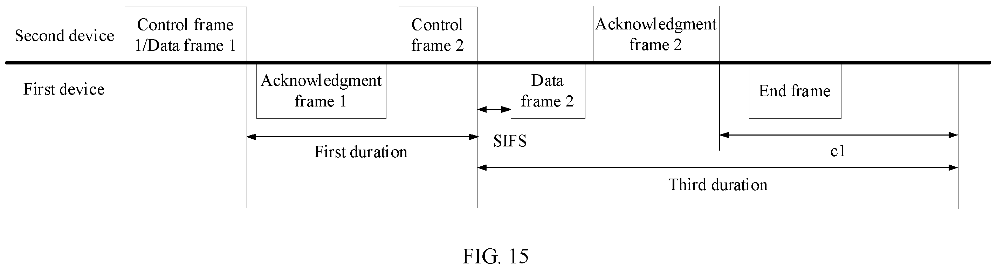

Alternatively, for example, refer to FIG. 15 for another diagram of sending the end frame by the first device according to an embodiment of this application. As shown in FIG. 15, after the second device sends the acknowledgment frame 2 to the first device, if the first device determines that the remaining duration (c1 is used as an example in FIG. 15) of the first timer is greater than the first threshold, the first device sends the end frame to the second device.

In addition, FIG. 15 further shows a process of interaction between the first device and the second device before the first device sends the end frame. As shown in FIG. 15, the second device may send the control frame 1 or the data frame 1 to the first device. After receiving the control frame 1 or the data frame 1, the first device sends the acknowledgment frame 1 to the second device. After receiving the acknowledgment frame 1, the second device sends the control frame 2 to the first device.

S309: The first device determines to end the interaction with the second device.

For example, the first device may also directly determine to end the interaction with the second device without sending the end frame to the second device. Optionally, when determining that the remaining duration of the first timer is less than or equal to the first threshold, the first device may determine to end the interaction with the second device.

S310: The second device determines to end the interaction with the first device.

For example, the first device may also directly determine to end the interaction with the second device without sending the end frame to the second device. Optionally, when determining that the remaining duration of the second timer is less than or equal to the first threshold, the second device may determine to end the interaction with the first device. For a manner in which the second device sets the first threshold, refer to the foregoing content in which the first device sets the first threshold.

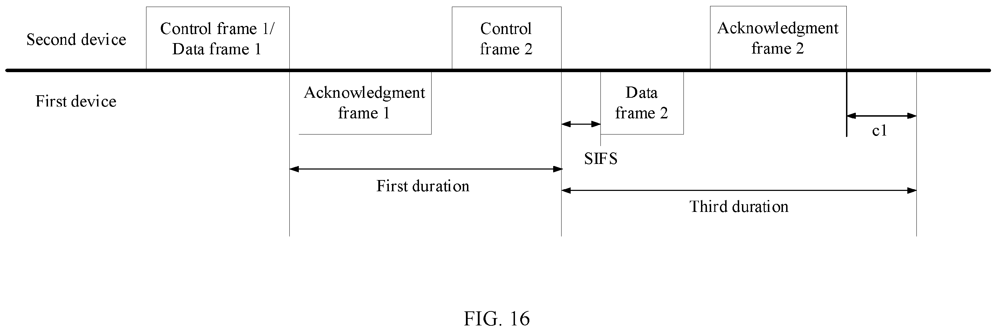

For example, FIG. 16 is still another diagram of sending the end frame by the first device according to an embodiment of this application. As shown in FIG. 16, after the second device sends the acknowledgment frame 2 to the first device, if the first device determines that the remaining duration (c1 shown in FIG. 16) of the first timer is less than or equal to the first threshold, the first device may directly determine to end the interaction with the second device; and if the second device determines that the remaining duration (c1 shown in FIG. 16) of the second timer is less than or equal to the first threshold, the second device may directly determine to end the interaction with the first device.

In addition, FIG. 16 further shows a process of interaction between the first device and the second device before the first device sends the end frame. As shown in FIG. 16, the second device may send the control frame 1 or the data frame 1 to the first device. After receiving the control frame 1 or the data frame 1, the first device sends the acknowledgment frame 1 to the second device. After receiving the acknowledgment frame 1, the second device sends the control frame 2 to the first device. The first device may send the data frame 2 to the second device. After receiving the data frame 2, the second device may send the acknowledgment frame 2 to the first device.

In the embodiments illustrated in S309 and S310, the first device or the second device may actively determine to end the interaction, and the first device does not need to send the end frame to the second device. In this way, the interaction between the first device and the second device is reduced.

In an example, S309 and S310 are optional steps, and are shown by using dashed lines in FIG. 3.

In an example, step S308 and steps S309 and S310 are two cases. In one interaction process between the first device and the second device, either step S308 is performed or steps S309 and S310 are performed.

In this embodiment of this application, the second device on the wireless local area network may reserve a channel for another device (for example, the first device) on the wireless local area network. In this way, the quantity of devices participating in the channel contention on the wireless local area network is reduced, and a probability of collision between devices is reduced. In addition, after receiving the control frame 2 from the second device, the first device may transmit the data frame. In this way, waiting duration of the first device is reduced, and a delay for the first device to send the data frame is effectively controlled, thereby helping improve experience of a delay-sensitive service. In addition, the first device and the second device may actively end the interaction, which helps reduce the quantity of interaction times between the first device and the second device. Moreover, in this embodiment of this application, a frame structure of a frame (for example, the data frame or the control frame) may not need to be improved, making implementation of this solution cost-effective and simple.

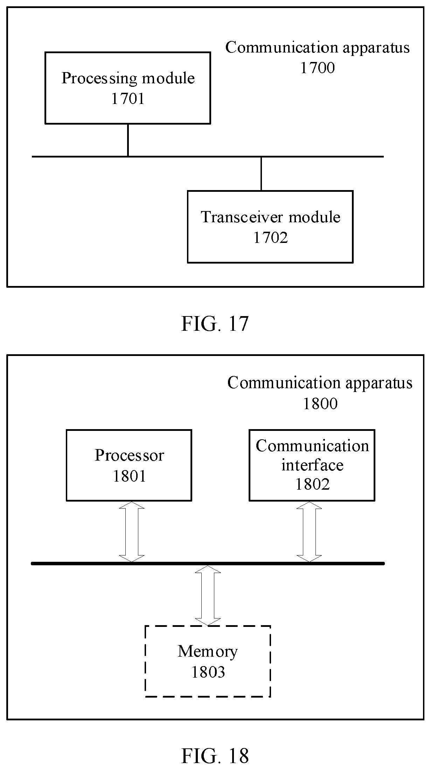

A diagram of a structure of a communication apparatus according to an embodiment of this application is provided. Refer to FIG. 17 for the diagram of the structure of the communication apparatus according to an embodiment of this application. As shown in FIG. 17, the communication apparatus 1700 includes a processing module 1701 and a transceiver module 1702.

In a first embodiment, the communication apparatus 1700 may implement a function of any one of the foregoing first devices, for example, implement a function of the first device in FIG. 3. Correspondingly, the communication apparatus 1700 may implement the steps performed by any one of the foregoing first devices.

For example, under control of the processing module 1701, the transceiver module 1702 may send an acknowledgment frame 1 to a second device, and receive a control frame 2 from the second device.

Optionally, under control of the processing module 1701, the transceiver module 1702 may receive a control frame 1 or a data frame 1 from the second device, send a data frame 3 to the second device, receive an acknowledgment frame 3 from the second device, and send an end frame to the second device. Optionally, the processing module 1701 may further determine to end interaction with the second device. For content of the acknowledgment frame 1, the control frame 2, the data frame 3, the acknowledgment frame 3, and the end frame, refer to the content described above.

In a second embodiment, the communication apparatus 1700 may implement a function of any one of the foregoing second devices, for example, implement a function of the second device in FIG. 3. Correspondingly, the communication apparatus 1700 may implement the steps performed by any one of the foregoing second devices.

For example, the transceiver module 1702, under control of the processing module 1701, receives an acknowledgment frame 1 from a first device, sends a control frame 2 to the first device, and receives a data frame 2 from the first device. Optionally, under control of the processing module 1701, the transceiver module 1702 may send a control frame 1 or a data frame 1 to the first device, receive a data frame 3 from the first device, send an acknowledgment frame 3 to the first device, and receive an end frame from the first device. Optionally, the processing module 1701 may further determine that the first device has a to-be-sent data frame, and determine to end interaction with the first device.

A diagram of a structure of another communication apparatus according to an embodiment of this application is provided. Refer to FIG. 18 for the diagram of the structure of the another communication apparatus according to an embodiment of this application. As shown in FIG. 18, the communication apparatus 1800 includes a processor 1801 and a communication interface 1802. It may be understood that the communication interface 1802 may be a transceiver or an input/output interface. The processor 1801 and the communication interface 1802 may implement any one of the foregoing communication methods, for example, may implement the communication method shown in FIG. 3.

The processor 1801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

Optionally, the communication apparatus 1800 may further include a memory 1803, configured to store instructions executed by the processor 1801, or store input data required by the processor 1801 to run instructions, or store data generated after the processor 1801 runs instructions.

Optionally, the communication apparatus 1800 may implement a function of the communication apparatus 1700 in FIG. 17. For example, the processor 1801 is configured to implement a function of the processing module 1701, and the communication interface 1802 is configured to implement a function of the transceiver module 1702.

In an embodiment, the communication apparatus 1800 may implement a function of any one of the foregoing first devices. Correspondingly, the communication apparatus 1800 may implement the steps performed by the foregoing first devices.

In another embodiment, the communication apparatus 1800 may implement a function of any one of the foregoing second devices. Correspondingly, the communication apparatus 1800 may implement the steps performed by the foregoing second devices.

An embodiment of this application provides a communication system. The communication system includes a first device and a second device. For a function of the first device, refer to any one of the foregoing functions of the first device, for example, the function of the first device in FIG. 3. For a function of the second device, refer to any one of the foregoing functions of the second device, for example, the function of the second device in FIG. 3.

An embodiment of this application provides a chip system. The chip system includes a processor and an interface. The processor is configured to invoke and run instructions from the interface. When executing the instructions, the processor implements any one of the foregoing communication methods, for example, implements the communication method shown in FIG. 3.

An embodiment of this application provides a computer-readable storage medium. The computer-readable storage medium is configured to store a computer program or instructions. When the computer program or the instructions are run, any one of the foregoing communication methods is implemented, for example, the communication method shown in FIG. 3 is implemented.

An embodiment of this application provides a computer program product including instructions. When the computer program product runs on a computer, any one of the foregoing communication methods is implemented, for example, the communication method shown in FIG. 3 is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may also exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device on a wireless local area network, wherein the method comprises:
sending a first acknowledgment frame to a second device, wherein the first acknowledgment frame indicates that the first device expects to access a channel;
receiving a first control frame from the second device, wherein the first control frame indicates that the first device is allowed to access the channel, the first control frame comprises an address of the first device, and the second device is any device other than the first device on the wireless local area network; and
sending a first data frame to the second device.

2. The method according to claim 1, wherein before the sending a first acknowledgment frame to a second device, the method further comprises:
receiving a second control frame or a second data frame from the second device, wherein the second control frame or the second data frame indicates first duration, the first duration comprises duration for which the second device sends the first control frame, and the first acknowledgment frame indicates that the second control frame or the second data frame has been received.

3. The method according to claim 1 or 2, wherein the first acknowledgment frame further indicates second duration, and the second duration comprises duration for which the first device expects to occupy the channel.

4. The method according to claim 3, wherein the first control frame further indicates third duration, and the third duration comprises duration for which the first device occupies the channel.

5. The method according to claim 4, wherein the third duration is equal to the second duration.

6. The method according to claim 4 or 5, wherein the method further comprises:
setting duration of a first timer to the third duration.

7. The method according to claim 6, wherein the method further comprises:
receiving a second acknowledgment frame from the second device, wherein the second acknowledgment frame indicates that the second device has received the data frame from the first device.

8. The method according to claim 7, wherein after the receiving a second acknowledgment frame from the second device, the method further comprises:
when remaining duration of the first timer is less than or equal to a first threshold, determining to end interaction between the first device and the second device; or
when remaining duration of the first timer is greater than a first threshold, sending an end frame to the second device, wherein the end frame indicates to end interaction between the first device and the second device.

9. The method according to any one of claims 3 to 8, wherein the first acknowledgment frame comprises a duration field, and a value of the duration field is the second duration.

10. A communication method, applied to a second device on a wireless local area network, wherein the second device is any device on the wireless local area network, and the method comprises:
receiving a first acknowledgment frame from a first device, wherein the first acknowledgment frame indicates that the first device expects to access a channel, and the first device is any device other than the second device on the wireless local area network;
sending a first control frame to the first device, wherein the first control frame indicates that the first device is allowed to access the channel, and the first control frame comprises an address of the first device; and
receiving a first data frame from the first device.

11. The method according to claim 10, wherein before the receiving a first acknowledgment frame from a first device, the method further comprises:
sending a second control frame, or sending a second data frame to the first device, wherein the second control frame or the second data frame indicates first duration, the first duration comprises duration for which the second device sends the first control frame, and the first acknowledgment frame indicates that the second control frame or the second data frame has been received.

12. The method according to claim 10 or 11, wherein the first acknowledgment frame further indicates second duration, and the second duration comprises duration for which the first device expects to occupy the channel.

13. The method according to claim 12, wherein the first control frame further indicates third duration, and the third duration comprises duration for which the first device occupies the channel.

14. The method according to claim 13, wherein the third duration is equal to the second duration.

15. The method according to claim 13 or 14, wherein the method further comprises:
setting duration of a second timer to the third duration.

16. The method according to claim 15, wherein the method further comprises:
sending a second acknowledgment frame to the first device, wherein the second acknowledgment frame indicates that the second device has received the data frame from the first device.

17. The method according to claim 16, wherein the method further comprises:
receiving an end frame from the first device, wherein the end frame indicates to end interaction between the first device and the second device, or
when remaining duration of the second timer is less than or equal to a first threshold, determining to end the interaction between the first device and the second device.

18. The method according to any one of claims 10 to 17, wherein before the sending a first control frame to the first device, the method further comprises:
determining that the first device has a to-be-sent data frame.

19. A communication apparatus, comprising a module configured to implement the method according to claims 1 to 18.

20. A communication apparatus, comprising a processor and a communication interface, wherein the communication interface is configured to: receive a signal from an apparatus other than the communication apparatus and transmit the signal to the processor, or send a signal from the processor to an apparatus other than the communication apparatus, and the processor is configured to implement the method according to any one of claims 1 to 18 through a logic circuit or by executing code instructions.

21. A communication system, comprising a first device and a second device, wherein the first device is configured to perform the method according to any one of claims 1 to 9, and the second device is configured to perform the method according to any one of claims 10 to 18.

22. A computer program product comprising instructions, wherein when the instructions are executed by a computing device cluster, the computing device cluster is enabled to perform the method according to any one of claims 1 to 18.

23. A computer-readable storage medium, wherein the storage medium stores a computer program or instructions, and when the computer program or the instructions are executed by a communication apparatus, the method according to any one of claims 1 to 18 is implemented.
